Europäisches Patentamt

European Patent Office

Office européen des brevets

(11) Numéro de publication: **0 267 151 B1**

# FASCICULE DE BREVET EUROPEEN

(45) Date de publication de fascicule du brevet: **30.12.92**   (51) Int. Cl.⁵: **B23H 7/02**

(21) Numéro de dépôt: **87810606.1**

(22) Date de dépôt: **21.10.87**

(54) Machine d'électroérosion pour usiner automatiquement selon une trajectoire fermée.

(30) Priorité: **30.10.86 CH 4291/86**

(43) Date de publication de la demande:
**11.05.88 Bulletin 88/19**

(45) Mention de la délivrance du brevet:
**30.12.92 Bulletin 92/53**

(84) Etats contractants désignés:
**DE FR GB IT SE**

(56) Documents cités:
**EP-A- 0 194 353**

**PATENT ABSTRACTS OF JAPAN, vol. 10, No.
134 (M-479)[2191], 17 mai 1986; & JP-A-60 259
323 (MITSUBISHI DENKI K.K.)**

(73) Titulaire: **CHARMILLES TECHNOLOGIES S.A.
8-10, rue du Pré-de-la-Fontaine Zone industrielle de Satigny
CH-1217 Meyrin 1(CH)**

(72) Inventeur: **Corcelle, Francois
Les Moraines
F-01710 Thoiry(FR)**
Inventeur: **Lakatos, Laszlo
7, rue Francois Durafour
CH-1220 Les Avanchets Geneve(CH)**

(74) Mandataire: **Hugelin, Christiane
c/o CHARMILLES TECHNOLOGIES SA Case
postale 373
CH-1217 Meyrin 1(CH)**

## Description

La présente invention à trait à un dispositif permettant d'automatiser entièrement l'usinage par électroérosion selon une trajectoire fermée ou dont les extrémités atteignent les bords de la pièce à usiner. La réalisation d'un procédé entièrement automatique était impossible jusqu'à présent.

En effet, de très nombreuses solutions ont été proposées pour éviter les défauts d'usinage dûs à la chute prématurée, peu avant la fin de cet usinage, de la partie découpée se trouvant à l'intérieur de cette trajectoire. Il s'agit, par exemple, d'un support amovible disposé sous la pièce à usiner (JP-OS 57-126.932, 57-126.933 et 57-126.934; JP-OS 57-132.926), d'un support central fixé situé sous cette dernière (CH 656 082), d'un bras-support pivotant sous cette dernière (JP-AS 58-171 218) ou encore du maintien de la "chute" par l'un des bras-supports de la pièce (CH 646 892), par des électro-aimants (DE-OS 3.209.136), par des alliages à bas points de fusion ou des colles anaérobies (CH 559.599). Mais, les solutions où une liaison est réalisée entre la pièce et la chute, ont l'inconvénient de devoir éliminer le matériau de liaison avant de pouvoir effectuer la finition. Dans le cas où on utilise un support additionnel destiné à maintenir la chute, ceci nécessite en général la mise en oeuvre d'un dispositif de commande compliqué afin d'éviter, par exemple, une collision entre le fil-électrode ou l'un de ses bras-supports et le support additionnel.

C'est pourquoi on recommande dans l'état actuel de la technique, en particulier dans la demande de brevet japonaise publiée sous le no 58-28429, d'arrêter l'usinage lorsque la "chute" n'est plus retenue que par un étroit pont de matière, subsistant seulement sur une partie de la hauteur de la pièce, appelé "isthme".

Pour simplifier, le terme "chute" sera utilisé par la suite pour désigner la partie découpée se trouvant à l'intérieur de la trajectoire, qu'elle soit un rebut détaché de la pièce à obtenir ou qu'elle soit elle-même la pièce qu'on désirait obtenir, le rebus étant alors le reste de l'ébauche.

La résistance mécanique de l'isthme doit être suffisante pour contrebalancer la masse de la chute et éviter qu'elle ne s'affaisse en se mettant en travers et n'endommage ou ne fasse dévier le filélectrode, provoquant des marques indélébiles sur les surfaces usinées.Cet isthme peut ne subsister que sur une partie de la hauteur de la chute. La chute était ensuite détachée en la frappant avec un marteau ou en découpant l'isthme avec une scie à découper comme décrit dans la demande japonaise publiée sous le numéro 58-28429. On pouvait ainsi réaliser une ou plusieurs ébauches sur la même pièce, mais l'intervention d'un opérateur restait nécessaire pour évider les contours découpés et, éventuellement, repositionner la pièce dans la zone d'usinage avant de mettre en route l'opération de finition. Une finition pouvait, en effet, être nécessaire pour éliminer la "cicatrice" due à la cassure de l'isthme, et être réalisée par électro-érosion ou toute autre méthode connue.

D'après la demande de brevet japonaise publiée sous le No 60-259 323, la chute peut aussi être frappée avec la buse supérieure d'amenée de liquide d'usinage, afin de rompre un isthme (ménagé sur toute la hauteur de la pièce à évider), puis soutenue par la buse inférieure d'amenée de liquide d'usinage. Cette dernière est ensuite actionnée verticalement vers le haut, afin de faire sortir la chute hors de l'orifice évidé et au-dessus de la surface supérieure de la pièce usinée. A ce moment, une amenée auxiliaire émet un jet de liquide d'usinage afin de "souffler" la chute hors de la zone d'usinage.

Mais ce dispositif ne permet de ne détacher que des chutes de forme déterminée et nécessite des aménagements spéciaux sur les deux têtes d'usinage ainsi que plusieurs réglages très précis de la position de ces derniers. En effet, la machine doit être munie d'une tête inférieure capable de se mouvoir verticalement. De plus, comme la buse supérieure est manoeuvrée hydrauliquement vers le bas jusqu'à une butée fixe, sa course verticale est invariable. Il faut donc régler avec précision la distance entre la chute à éjecter et la tête supérieure. Un autre inconvénient est dû au jeu de la chute dans le trou évidé : si la poussée exercée par la buse inférieure pour la remonter à travers ce trou n'est pas appliquée exactement à son centre de gravité, elle va se coincer contre le bord du trou, en particulier contre l'excroissance représentée par l'isthme de matière qui subsiste sur toute la hauteur du trou. La géométrie des chutes éjectables par ce dispositif est donc limitée à des chutes peu épaisses et, surtout, présentant une face inférieure plane et horizontale ainsi qu'une face supérieure dont le centre comporte une plage plane, parallèle à la face inférieure et dont la surface est au moins égale à la surface d'impact de la buse. Ajoutons que dans le cas de l'usinage de plusieurs trous dans la pièce, l'évacuation des chutes par jet de liquide présente le risque que la chute ne se coince dans l'un des trous déjà usiné, situé sur sa trajectoire.

C'est pourquoi le dispositif de la présente invention a pour but de provoquer volontairement et automatiquement, à la fin de l'ébauche, lorsque la "chute" n'est plus retenue que par un isthme de résistance prédéterminée, subsistant éventuellement sur une partie seulement de la hauteur de la chute et sans l'intervention d'un opérateur, la rupture de cet isthme puis l'éjection ou la chute de la partie découpée, et de passer automatiquement à une éventuelle finition, ceci quelle que soit la forme de la chute et sans présenter les inconvénients de l'état de la technique : risque que la chute ne se mette "en travers" et ne vienne se coincer sur les bords du trou ainsi évidé, recours à des têtes d'usinages conformées spécialement, en particulier à une buse inférieure mobile verticalement, plusieurs réglages précis (distance entre la buse supérieure et la chute à évider, positionnement horizontal de la surface inférieure de la pièce à usiner, point d'application de la poussée par la buse inférieure). Ainsi, contrairement à l'enseignement de la technique, on ne maintient plus la chute une fois que le pont est rompu. On évite que les parties ainsi détachées ne s'entassent sous la zone d'usinage, soit en les évacuant automatiquement, soit, si leurs dimensions le permettent, en les répartissant automatiquement dans le bac d'usinage ou dans un réceptacle interposé sur le trajet de leur chute.

C'est pourquoi l'un des objets de la présente invention est une machine d'électroérosion telle que définie à la revendication 1, comportant un dispositif auxiliaire agencé pour rompre un étroit pont de matière maintenant une chute de forme quelconque et la faire tomber ou l'éjecter à un moment prédéterminé de l'usinage. Ce pont peut ne subsister que sur une partie de la hauteur de la chute. Ceci peut être réalisé soit en percutant la chute ou en exerçant sur elle une pression, soit en cisaillant ce pont ou en exerçant sur lui un couple de torsionarrachement, soit en le soumettant à un effet thermique ou à un rayonnement localisés à ce pont. Par dispositif "auxiliaire", on entend un dispositif additionnel, distinct des organes usuels généralement présents sur les têtes d'usinage (guide-fil, contacts électriques, buses injectant le liquide d'usinage, etc..).

Un tel dispositif permet de découper dans une pièce, de façon entièrement automatique, et sans défaut d'usinage, un ou plusieurs contours fermés, et ceci que cette pièce ait ou non des faces supérieures et inférieures planes et parallèles, et quelle que soit son épaisseur. Il ne nécessite aucun réglage précis de la position des têtes d'usinages inférieures et supérieures, en particulier de leur position verticale. Il suffit de l'amener en regard de la chute à éjecter, par exemple en positionnant le dispositif auxiliaire au repère déjà utilisé pour effectuer le trou d'enfilage du fil, et situé à un endroit quelconque de la future chute, c'est-à-dire pouvant être distinct de son centre de gravité.

On utilise de préférence un dispositif auxiliaire selon la présente invention pour détacher une chute retenue par un pont de matière ne subsistant que sur une partie, seulement, de la hauteur de la pièce. Ainsi, dans le cas, par exemple, d'un dispositif auxiliaire muni d'un percuteur ou d'un poussoir, il suffit d'exercer une poussée ou un impact relativement faible en un point quelconque de la face supérieure de la chute, pour détacher cette dernière. Il est ainsi possible d'utiliser un percuteur actionné seulement par sa propre masse. On augmente ainsi la fiabilité, en diminuant les probabilités de non-éjection de la chute.

Pour des raisons évidentes, il est préférable de séparer la partie découpée (et interne) de la pièce initiale avant de réaliser la passe de finition. Mais dans la plupart des procédés connus celà nécessitait un arrêt du cycle d'usinage automatique et une intervention humaine. Grâce au présent dispositif il est maintenant possible de programmer le passage automatique de l'opération d'ébauche à celle de finition, sans être gêné par la chute pour effectuer cette dernière , c'est-à-dire sans les inconvénients bien connus d'une finition dans la fente.

Il suffit de mettre ce dispositif en action entre l'opération de l'ébauche et celle de finition. De plus, ceci a aussi comme avantage d'éliminer la "cicatrice" due à la cassure de l'isthme en réalisant la finition proprement dite, donc de ne nécessiter qu'une seule passe de finition, alors que précédemment, lorsqu'on choisissait d'effectuer la finition alors que la chute était encore maintenue par l'isthme (finition dans la fente) et de n'expulser cette chute qu'en fin d'usinage, il fallait effectuer une deuxième passe de finition pour éliminer cette "cicatrice".

Le dispositif caractérisant la machine à découper par électroérosion de la présente invention, peut présenter une infinité de formes d'exécution. Seules certaines seront illustrées schématiquement et à titre d'exemple, par le dessin annexé.

La figure 1 est une coupe schématique d'une machine à découper par électroérosion comportant l'un des modes de réalisation possibles du dispositif auxiliaire caractéristique de la présente invention.

Les figures 2 et 3 schématisent différentes étapes de l'usinage d'une pièce avec un dispositif selon la présente invention.

Les figures 4 à 6 illustrent quelques unes des nombreuses formes d'exécution possibles d'un repoussoir ou percuteur selon la présente invention.

La figure 7 schématise une forme d'exécution d'un réceptacle des chutes éjectées selon la présente invention.

La figure 8 illustre une application du dispositif selon la présente invention lors d'un enfonçage par électroérosion.

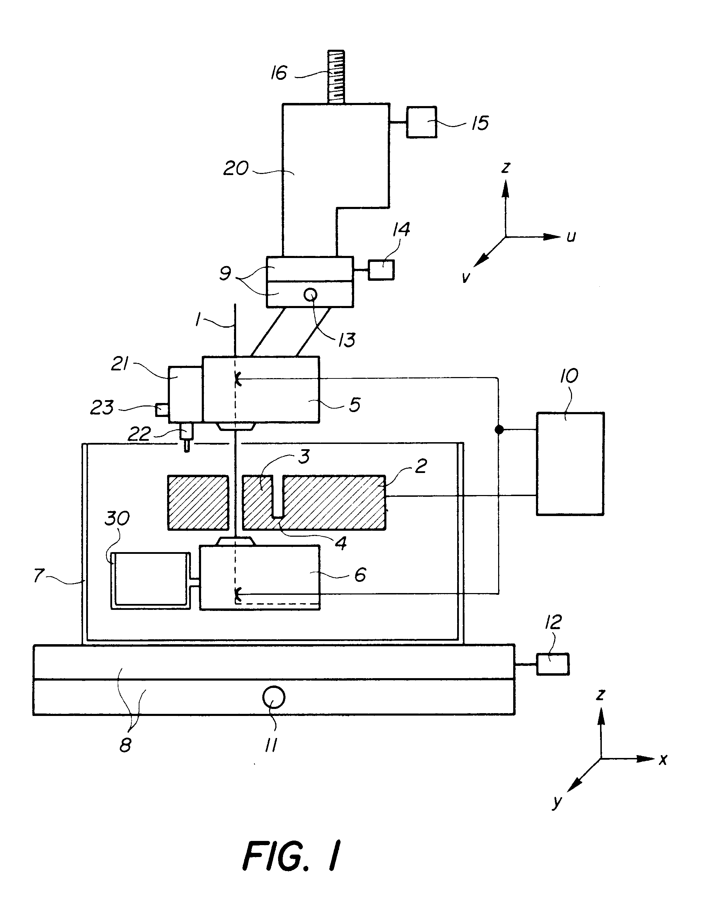

La figure 1 schématise une machine de type connu pour découper par électroérosion au moyen d'un fil-électrode 1. La partie active de ce dernier est tendue entre deux guides de type connu (non représentés) situés à l'intérieur des deux têtes d'usinage 5 et 6. Il s'agit en général de pierres dures telles du saphir ou du diamant, percées d'un orifice. La table à mouvements croisés 9 permet d'incliner le filélectrode par rapport à la verticale en déplaçant la tête d'usinage supérieure 5 par rapport à la tête d'usinage inférieure 6, située dans le bac 7. Le déplacement est effectué dans le plan perpendiculaire au plan de la figure 1, défini par les axes de coordonnées cartésiennes U et V. La tête supérieure 5 est mobile verticalement, tandis que la tête inférieure 6 ne peut se déplacer relativement à la pièce 2 que dans un plan horizontal.

Chaque tête d'usinage contient aussi une buse pour injecter le liquide diélectrique d'usinage et un contact (non représenté) amenant au fil 1 le courant électrique délivré par le générateur 10. Un dispositif de fourniture du fil (non représenté) est monté sur le bras supérieur 20, mobile verticalement et portant déjà la tête d'usinage 5 tandis qu'un système d'avance, de type connu (et donc non représenté) assure le défilement continu et donc le renouvellement du fil-électrode 1. Le bras supérieur 20 peut également comporter un système pour chauffer le fil ainsi qu'un dispositif de coupe et de réenfilage automatique du fil du type de ceux décrits, par exemple, dans les brevets CH 641 709 et 646 356 ou dans la demande européenne publiées sour le No 206 041. Un tel dispositif permet de découper automatiquement plusieurs contours successifs sur la même pièce. Une deuxième table à mouvements croisés 8 supporte le bac 7 et assure les mouvements relatifs entre le fil et la pièce à usiner 2. Les mouvements sont effectués dans un plan perpendiculaire au plan de la figure 1 et défini par les axes de coordonnées cartésiennes x et y.

Cette pièce 2 est maintenue par deux supports (non représentés) situés dans le bac 7 et fixés à ce dernier. Le générateur électrique 10, relié également à la pièce 2 à usiner, provoque des décharges érosives entre le fil électrode 1 et la pièce 2, qui est découpée par l'avance progressive du fil 1 le long d'une trajectoire préétablie, commandée par les servomoteurs 11 et 12 de la table à mouvements croisés 8, contrôlés par une unité de commande numérique non représentée. Cette dernière est également reliée (par des liaisons non représentées), d'une part aux servomoteurs 13 et 14 qui actionnent les mouvements croisés de la table 9 et permettent ainsi d'obtenir l'inclinaison désirée pour le filélectrode 1, et d'autre part à un moteur 15 qui commande le déplacement vertical de la tête d'usinage supérieure 5, selon l'axe z, le long de la crémaillère 16.

Un organe cylindrique 21 est vissé sur la tête d'usinage supérieure 5 grâce à la vis 23, et porte un repoussoir vertical et amovible 22, dont l'extrémité inférieure se projette sous le plan inférieur de la tête 5. La section du repoussoir peut être par exemple ronde, triangulaire ou carrée.

Il peut présenter la même section sur toute sa hauteur ou être de forme tronconique, présentant une section dont la surface va en diminuant vers l'extrémité inférieure. Dans la forme d'exécution représentée à la figure 1, il est en forme de tétons étagés, c'est -à-dire composé d'une suite de cylindres de même axe, accolés deux à deux par leurs bases, et dont les diamètres vont en s'amenuisant vers une extrémité.

L'élément 22 constitue la tige d'un piston dont la tête 24 peut venir comprimer un ressort. Cette compression provoque automatiquement l'arrêt, éventuellement précédé d'un ralentissement, du mouvement vertical du bras 20.Un réceptacle 30 est fixé à la tête d'usinage inférieure 6 pour recueillir la chute 3 après la rupture de l'isthme 4.

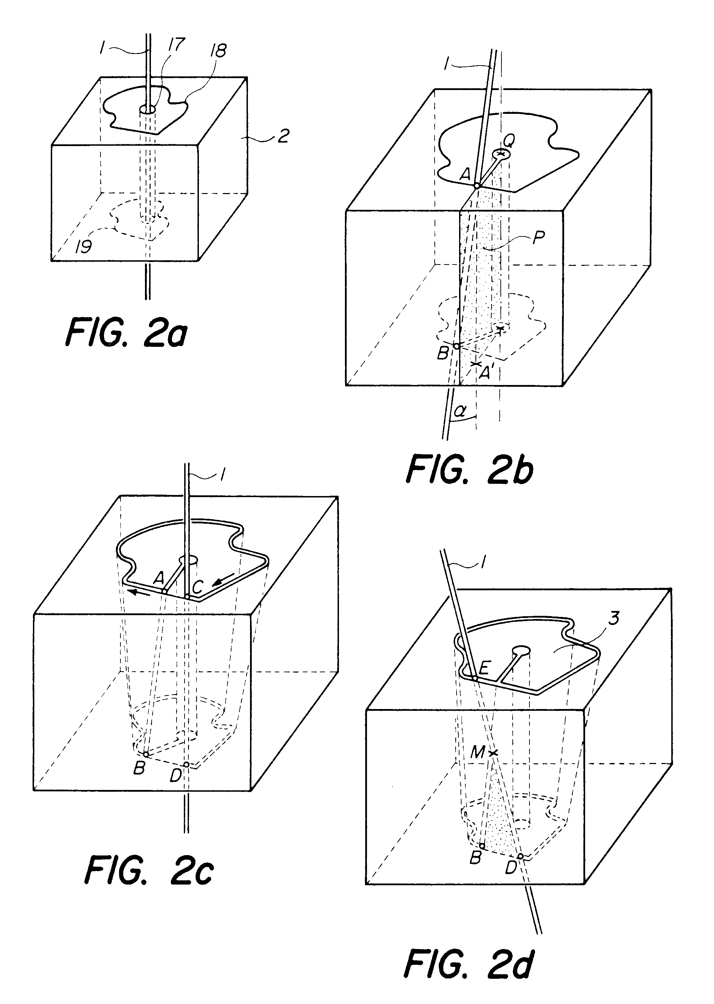

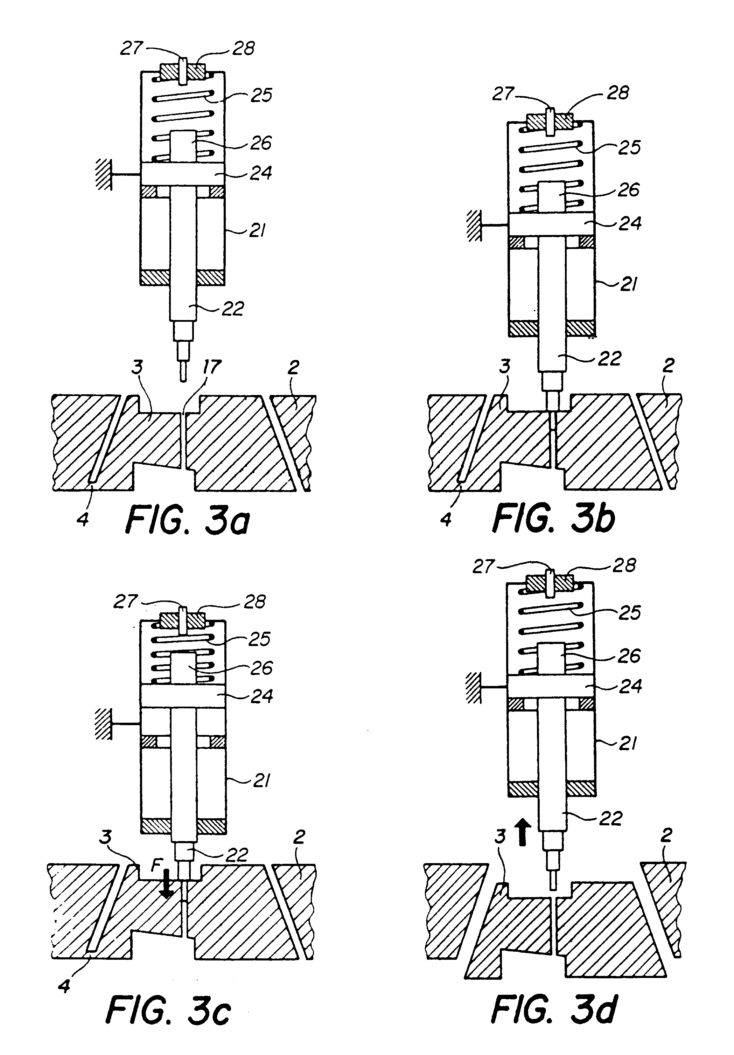

Les figures 2 et 3 schématisent différentes étapes de l'usinage d'une pièce 2 dans laquelle on désire ménager un évidement la traversant de part en part. Le volume à évider se projette sur le plan supérieur de la pièce 2 selon la trajectoire fermée 18 et sur son plan inférieur selon la trajectoire fermée 19. Un orifice 17 a été percé au préalable, à un endroit prédéterminé, dans la pièce 2 afin d'y enfiler le fil-électrode 1 (figure 2a).

La commande numérique programme l'enfilage automatique du fil 1, puis actionne la table à mouvements croisés 8, grâce à laquelle la pièce 2 peut se déplacer relativement au fil-électrode 1, de manière que ce dernier y découpe par électroérosion un couloir de départ joignant l'orifice d'enfilage 17 à deux points prédéterminés A et B des trajectoires 18 et 19.

Grâce à la table à mouvements croisés 9, il est éventuellement possible de déplacer simultanément la tête d'usinage supérieure 5 par rapport à la tête 6 donnant ainsi au fil 1 une inclinaison donnée par rapport à la verticale. Ceci est illustré à la figure 2b, où la droite AB est inclinée d'un angle α par rapport au plan vertical P. (Ce plan P contient le centre Q de l'orifice 17, le point A et sa projection A' sur le plan inférieur de la pièce 2).

On effectue ensuite, de façon connue, la découpe selon les trajectoires prédéterminées 18 et 19, en allant dans le sens A′ à B, ceci jusqu'à ce que le fil-électrode se trouve au point C sur la trajectoire 18. Il est alors au point D sur la trajectoire 19. Il subsiste un pont AC sur la trajectoire 18 ainsi qu'un pont BD sur la trajectoire 19 (figure 2c).

Il reste alors à incliner le fil-électrode 1 en déplaçant la tête 5, de façon qu'il croise la trajectoire 18 en un point prédéterminé E. La partie centrale à évider (chute 3) est maintenant retenue à la pièce 2 grâce à un triangle de matière non découpé MBD (M étant le point commun aux droites AB et DE; figure 2d).

La commande numérique arrête alors l'usinage par électroérosion en coupant le générateur 10 et en programmant la coupe et le retrait du fil-électrode 1. Elle commande ensuite le positionnement du repoussoir 22 en regard de l'orifice d'enfilage 17, par la translation de la pièce usinée 2. La trajectoire de la chute 3 est en retrait de la tête d'usinage inférieure 6.

Le réceptacle 30 est alors positionné de façon à recueillir la chute 3. Enfin la commande numérique actionne le moteur 15 de façon à abaisser verticalement le bras 20 de long de la crémaillère 16.

La figure 3 illustre une première forme d'exécution d'un dispositif à repoussoir selon la présente invention, dont le repoussoir 22, réalisé en matériau électroconducteur, est en forme de tétons étagés comme celui illustré à la figure 1.

Les rayons de deux cylindres successifs diffèrent de quelques mm, de préférence de 2 mm. Ceci permet de s'adapter à des trous d'enfilage 17 de diamètres variés. La tête 24 du pistion est reliée à la terre et est surmontée d'une pièce électroconductrice 26. Le ressort 25 est calibré de façon à exercer une poussée donnée (force F). Un dispositif de sécurité (non représenté) arrête automatiquement la descente du bras lorsqu'une section donnée du repoussoir 22 est à la hauteur de la surface supérieure de la pièce 2, ceci afin de pallier une non-expulsion éventuelle de la chute.

Lorsque s'amorce la descente du bras 20 (non représenté) vers la chute 3 à expulser, le ressort 25 n'est pas comprimé (figure 3a). Le repoussoir 22 entre ensuite en contact avec les bords de l'orifice 17. Le ressort 25 commence à se comprimer (figure 3b).

Le ressort 25 continue à se comprimer jusqu'à ce qu'il développe une force de poussée (force F) suffisante pour éjecter la chute 3 (figure 3c).

L'isthme 4 est rompu, la chute 3 est expulsée, animée d'un mouvement vertical, la forme du repoussoir 22 ayant un effet de guidage. Le ressort 25 se détend et le bras 20 amorce un mouvement de remontée programmé par la commande numérique (figure 3d).

En cas de non-éjection, un système de sécurité est prévu :le ressort 25 continue à se comprimer jusqu'à ce que la butée électroconductrice 26 vienne toucher l'électrode 27, maintenue par une bague isolante 28, ce qui arrête la progression du bras 20.

La force F, et par suite le calibrage du ressort 25, ont été par exemple, déterminés expérimentalement, ou par des mesures effectuées par des capteurs, avant d'entreprendre le cycle d'usinage automatique.

L'électrode de contact 27 peut être plus ou moins enfoncée dans l'organe cylindrique 21.

La forme du repoussoir 22 est particulièrement avantageuse, car elle permet de travailler en ne tenant compte que de la géométrie et des coordonnées du trou d'enfilage, et de repousser la chute en ne s'appuyant que sur une très faible surface de cette dernière. En effet, il suffit que le têton approprié du repoussoir 22 ne présente qu'un diamètre légèrement supérieur à celui du trou d'enfilage 17 et n'appuie que sur une étroite bande de matière entourant cet orifice.

Il est ainsi possible d'éjecter des chutes de formes extrêmement variées, présentant, par exemple, une face inférieure quelconque, puisqu'elles n'intervient pas dans le processus d'éjection. La face supérieure n'est pas nécessairement horizontale. Elle peut être oblique, présenter un relief, même assymétrique. La chute peut s'évaser vers le bas, puisque son évacuation hors de la zone d'usinage se fait dans cette direction.

La commande numérique peut maintenant programmer le réenfilage du fil-électrode et, soit un deuxième passage de ce dernier le long des trajectoires 18 et 19, afin d'effectuer la finition de la surface de l'évidement ainsi réalisé, soit un nouveau positionnement de la pièce 2 afin de commander l'ébauche d'un deuxième évidement, et ainsi de suite.

Dans le cas d'une chute de masse relativement élevée, il peut être judicieux de réaliser plusieurs isthmes 4 afin de la maintenir avant d'effectuer son éjection à un moment prédéterminé de l'usinage.

Il est bien entendu que la forme d'exécution décrite ci-dessus ne présente aucun caractère limitatif. On peut mettre en oeuvre avantageusement une grande variété de variantes du dispositif-éjecteur décrit ci-dessus. On notera en particulier que le mouvement vertical de l'organe 21, peut être obtenu par d'autres moyens appropriés, de type connu, tels des moyens hydrauliques, pneumatiques, mécaniques, électriques, magnétiques, etc..., tel un moteur auxiliaire agencé pour commander une ou plusieures légères poussées successives de l'ensemble organe 21/repoussoir 22 sur la chute 3.

Ce mouvement vertical de l'organe 21 peut d'ailleurs être indépendant du mouvement de la tête d'usinage 5 portée par le bras 20, l'ensemble organe 21/ repoussoir 22 étant actionné par l'un des moyens mentionnés ci-dessus.

L'organe 21 portant l'élément 22 peut également être fixé sur la tête d'usinage 5, tandis que seul l'élément 22 est actionné verticalement.

La poussée peut être exercée en un autre point qui n'est pas confondu avec l'orifice d'enfilage 17, bien que cette manière d'opérer simplifie la programmation de la commande numérique puisque cette dernière comporte déjà les coordonnées de l'orifice 17.

L'élément 22 peut être un percuteur venant frapper cette chute, soit sous l'action de son propre poids, soit par action d'un moyen approprié, qu'il soit pneumatique, hydraulique, électrique, magnétique, mécanique, faisant appel à la décompression d'un ressort ou à l'explosion contrôlée d'un gaz provoquée chimiquement ou par une étincelle, etc.

L'organe 21 doit alors présenter un dispositif mettant en oeuvre une ou plusieures forces de l'un des types mentionnés ci-dessus, et apte à actionner le percuteur 22. Il présente également, en général, un dispositif permettant au percuteur de reprendre sa position de repos dans l'organe 21. Toutefois, dans certaines formes d'exécution, il est possible, lorsque ce percuteur 22 est de forme appropriée, de ne le récupérer qu'à la fin du cycle automatique d'usinage, par exemple avec les chutes. Ce dispositif de remontée peut, lui aussi, faire appel à une ou plusieures forces de l'un des types mentionnés ci-dessus (pneumatique, électrique, etc..) Il peut également faire appel à une liaison permanente (ressort, cable, etc..) entre l'organe 21 et le percuteur 22 qui permette de faire remonter ce dernier dans son logement et de le maintenir en position de repos.

Comme dans le cas d'un repoussoir, l'impact du percuteur 22 n'est pas forcément confondu avec le trou d'enfilage 17. Il peut être situé en n'importe quel point de la surface de la chute 3 ou de l'isthme 4.

Une faible force exercée par le repoussoir ou le percuteur 22 suffit en général pour rompre le pont de matière 4. Dans le cas contraire, il est possible de commander des poussées ou des percussions successives. Un dispositif peut être prévu pour signaler à la commande numérique que la chute a été éjectée.

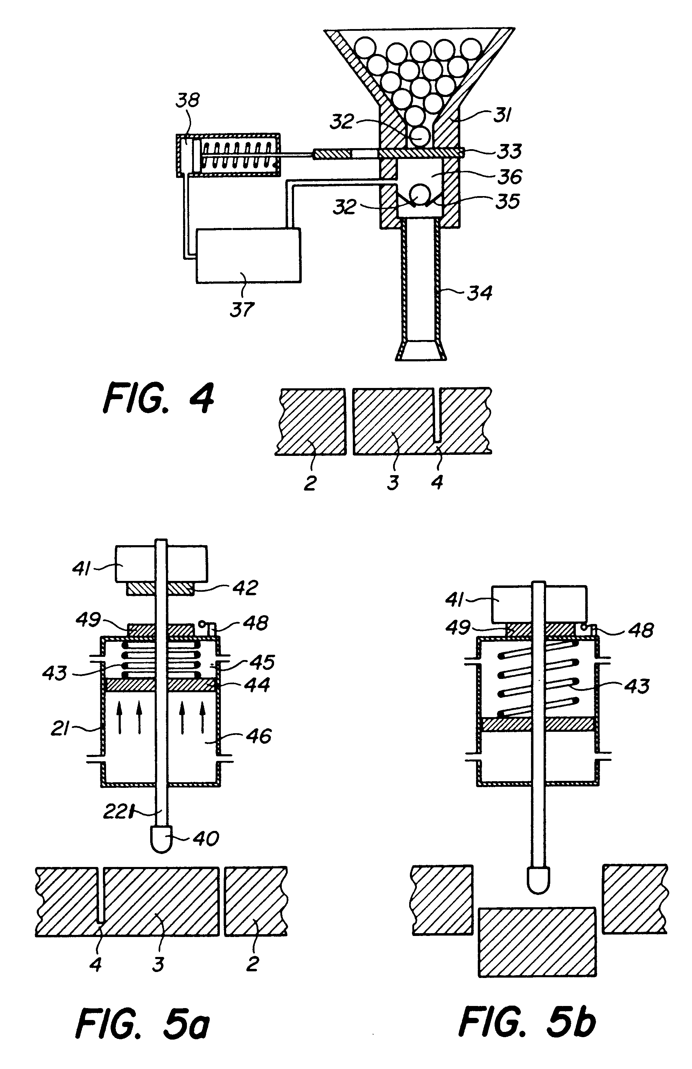

La figure 4 illustre, à titre d'exemple, une forme d'exécution d'un organe 21 selon la présente invention, comprenant une trémie 31 contenant des billes 32, fermée par une glissière 33 allant et venant sous l'ouverture pratiquée à la base de la trémie 31 et qui permet à une bille 32 de tomber à travers un guide vertical 34 pour venir percuter la chute 3 ou l'isthme 4. La membrane souple 35 située près de l'ouverture inférieure de la trémie 31 assure une chute des billes 32 centrée le long de l'axe du guide 34.

Les billes 32 ont une taille et une masse appropriée à l'intensité désirée pour la percussion. Il peut s'agir, par exemple, de billes de plomb, éventuellement recouvertes d'une couche d'acier inoxydable, dont la dimension est appropriée à la force de percussion désirée.

Les dimensions de l'ouverture inférieure de la trémie 31 et de la section du guide 34 sont évidemment appropriées à celles des billes 32.

La chute des billes 32 peut être provoquée par leur propre poids. Pour obtenir la percussion il suffit de commander le mouvement horizontal de la glissière 33, par exemple grâce à un moteur ou grâce à un vérin à air comprimé 38, comme représenté sur la figure 4. Il peut être avantageux de prévoir une membrane 35 suffisamment résistante pour retenir une bille 32. Pour obtenir la percussion, il suffit de commander la chute de cette bille 32 en injectant par exemple de l'air comprimé dans l'espace 36 situé entre la glissière 33 et la membrane 35, grâce à une canalisation reliant l'espace 36 à une source d'air comprimé 37. L'alimentation du vérin 38 et de l'espace 36 par la source d'air comprimé 37 peut être commandée automatiquement par l'unité de commande numérique qui actionne les autres dispositifs d'usinage de la machine d'électroérosion. Cette source d'air comprimé peut être d'un type industriel connu ou être, par exemple, un mécanisme similaire à celui d'un fusil à plombs.

Citons encore un exemple d'une deuxième forme d'exécution possible, selon la présente invention, pour un organe 21 muni d'un percuteur 221. Elle est illustrée à la figure 5. L'organe 21 comprend un percuteur en forme de barre verticale 221, éventuellement munie d'une masselotte 41 entourant son extrémité supérieure et, de préférence, fixée sur la barre 221 de manière amovible afin de pouvoir faire varier et de régler à volonté la masse de l'ensemble. Elle peut également être munie à son extremité inférieure d'une pièce 40 amovible, de forme et de masse variable. La course du percuteur 221 est réglée par la butée 42 arrêtant la masselote 41. La position de cette butée 42 peut, de préférence, varier le long du trajet du percuteur 221 en fonction de la distance à laquelle se trouve la pièce usinée 2 portant la chute 3 à expulser.

De plus, elle est mobile horizontalement et peut être écartée, par tout moyen connu, du percuteur, afin de laisser tomber librement celui-ci (figure 5b). L'organe 21 est un vérin pneumatique, muni d'un ressort 43 dans sa chambre supérieure 45. Une source d'air comprimé, munie d'un régulateur de pression, non représentée, peut envoyer de l'air comprimé dans la chambre inférieure 46 ou alternativement dans les chambres supérieures 45 et inférieures 46 du vérin 21, actionnant ainsi verticalement la rondelle 44 selon un mouvement de va-et-vient. Cette rondelle 44 étant solidaire du percuteur 221, ce dernier peut donc être actionné verticalement également par la source d'air comprime.

La force de percussion peut donc être le résultat de la conjugaison de 3 moyens agissant sur le percuteur 221 : la masse de l'ensemble percuteur/masselotte, la poussée de l'air comprimé dans la chambre supérieure 45 et la poussée du ressort 43 agissant sur la rondelle 44. Il est possible de ne laisser agir que le premier et le dernier de ces moyens, ne faisant intervenir la poussée de l'air comprimé que pour faire remonter le percuteur en alimentant la chambre inférieure 46 afin de repousser la rondelle 44 et par suite le percuteur 221, vers le haut. Il suffit d'actionner le moyen de remise en position de la butée 42 pour se retrouver dans la position de départ (figure 5a).

L'organe 21 peut être muni d'un interrupteur de détection de chute 48, actionné par la masselotte 41, lorsque celle-ci vient buter sur le joint 49 disposé au dessus du vérin 21, ce qui indique si la chute est tombée ou non.

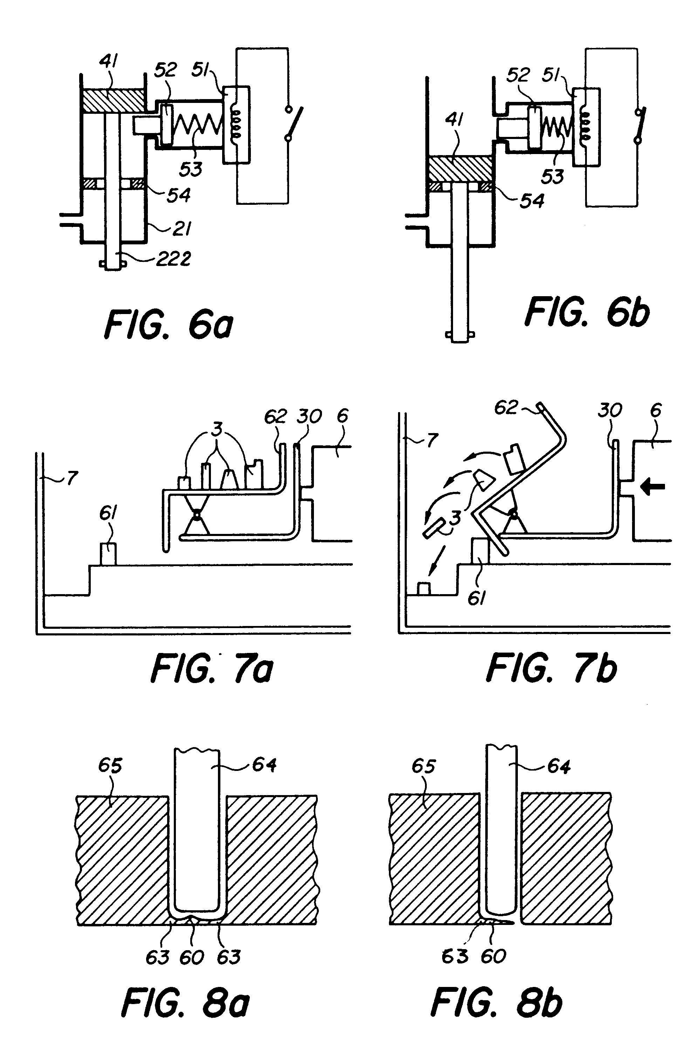

Il peut être également avantageux de faire appel au dispositif illustré à la figure 6. Le vérin 21, qui peut être actionné hydrauliquement ou pneumatiquement, comporte une butée 54 empêchant le choc de la masselotte 41 sur la base de ce vérin.

L'ensemble percuteur 222/masselotte 41 est maintenu en position haute par la glissière 52. Cette dernière est réalisée dans un matériau ferromagnétique et peut être manoeuvrée horizontalement grâce à l'électroaimant 51. La masselotte 41, dont la course est réalisée entièrement à l'intérieur du vérin 21, joue le rôle de piston. Il suffit de connecter l'électroaimant 51 pour attirer la glissière 52 hors de la chambre interne du vérin 21 et pour faire tomber ainsi l'ensemble percuteur 222/masselotte 41 sous l'effet de leur masse (figure 6b). Le ressort 53 est alors comprimé entre la glissière 52 et l'électro-aimant 51. Pour faire remonter le percuteur en position de repos, on actionne le vérin 21 en alimentant sa chambre inférieure en gaz ou en fluide comprimé, afin de repousser la masselotte vers le haut et on déconnecte l'électroaimant 51. Sous l'effet de la décompression du ressort 53, la glissière 52 pénètre à nouveau dans la chambre interne du vérin 21 et maintient la masselotte 41 en position haute. On peut alors arrêter l'alimentation du vérin 21 et éliminer la surpression à l'intérieur du vérin.

Au lieu de prévoir un élément agencé de façon à venir pousser ou percuter la chute 3, il est aussi possible de mettre en oeuvre un élément agissant directement sur le pont de matière 4, par exemple en le cisaillant ou en le soumettant à un effet thermique ou à un rayonnement localisé.

Les chutes ainsi éjectées et recueillies dans un réceptacle, peuvent être évacuées automatiquement par un dispositif monté par exemple sur la tête supérieure ou sur un élément mobile indépendant et muni, par exemple, d'un aimant.

Il peut être avantageux de prévoir une sorte de butée 61 (figure 7a) venant s'appuyer sur une partie du réceptacle 30, par exemple le fond, ce réceptacle étant fixé à la tête d'usinage inférieure 6. Lorsque la table à mouvements croisés 8 (figure 1) est animée d'une translation horizontale, par exemple parallèle à l'axe x, ceci a pour effet de faire basculer le double-fond 62 du réceptacle 30 et de faire ainsi tomber automatiquement la ou les chutes 3 qu'il contenait dans un récipient extérieur au bac 7 ou dans une zone de ce bac 7 non utilisée pour l'usinage (figure 7b).

La commande de ce dispositif est très simple : il suffit de commander une translation de la table 8. Un système de rappel est prévu pour ramener le double-fond 62 à l'horizontale lorsque le réceptacle 30 est écarté de la butée 61. Il peut être de tout type connu, tel un contrepoids, par exemple.

On peut également prévoir, afin que la chute ne vienne pas endommager les organes situés dans le bac 7, un réceptacle 30, de forme appropriée, pour protéger ces derniers, tel un récipient de forme quelconque et de dimensions adaptées au nombre et aux dimensions des chutes, disposé de façon à recueillir la chute une fois que l'isthme est rompu, ou encore tel un filet, par exemple en grillage inoxydable, fixé sur les bords du bac. Ce réceptacle peut évacuer automatiquement du bac les chutes qu'il contient au bout d'un nombre prédéterminé d'éjections. Il peut également être de taille suffisante pour contenir toutes les chutes prévues pendant un cycle d'usinage et correspondant à l'usinage de nombreux orifices dans la pièce usinée, l'évacuation des chutes étant alors effectuée avant la mise en route du cycle d'usinage suivant.

Le récipient peut alors avantageusement être muni de moyens permettant d'égaliser la répartition des chutes.

Signalons enfin que si le dispositif pour expulser les chutes selon la présente invention a été décrit dans ce qui précède en corrélation avec une machine d'électrérosion pour découper avec un fil-électrode, il peut également présenter un intérêt dans le cas d'une machine à découper par électroérosion présentant une électrode dont la forme diffère d'un fil, ou encore dans le cas d'une électroérosion par enfonçage, pourvu qu'on désire évider la pièce à usiner sur toute son épaisseur.

Il est en effet connu que vers la fin de l'usinage, comme illustré à la figure 8, lorsqu'une faible pellicule 60 de matière subsiste au fond de l'orifice que l'électrode d'enfonçage 64 est en train de percer dans la pièce à usiner 65, cette dernière, qui peut présenter approximativement l'une des formes montrées aux figures 8a et 8b, va être érodée de manière irrégulière, ce qui provoque des défauts d'usinage.

Un dispositif éjecteur, tel que celui décrit précédemment, peut être utilisé avantageusement pour rompre les faibles ponts de matière 63 et éjecter la chute 60. L'outil d'enfonçage 64 peut ensuite être remis en action pour réaliser une finition.

Le dispositif de la présente invention ne présente donc pas les contraintes ou les limitations de l'état de la technique, en particulier quand à la géométrie de la pièce (et de la chute), à la complexité des réglages à effectuer et à la fiabilité relative surtout à l'évacuation des chutes.

Il est en effet possible d'éjecter automatiquement et de manière fiable, (c'est-à-dire sans risque de coincement dans le trou évidé), des chutes de n'importe quelle configuration. La seule limitation concerne le profil des faces latérales de la chute qui doit lui permettre de tomber vers le bas ou d'être éjectée. En particulier, on n'est pas limité à des côtés parfaitement verticaux, comme dans le cas décrit dans la demande japonaise publiée sous le No 60-259 323.

De plus, il suffit de positionner l'éjecteur au dessus de la chute. La situation du point d'impact ou d'application de la poussée par rapport au centre de gravité de cette chute a peu d'importance. La commande numérique n'a qu'un seul mouvement horizontal à programmer. Il n'est même pas nécessaire d'enregistrer de nouvelles coordonnées car une manière élégante d'opérer consiste à placer l'éjecteur en regard du trou d'enfilage, les coordonnées de ce dernier étant déjà enregistrées par la commande numérique. Contrairement au dispositif décrit dans la demande japonaise publiée sous le No 60-259 323, il est inutile de régler avec précision la distance entre la tête supérieure et la pièce, ainsi que la position des deux têtes d'usinage par rapport à la pièce, en particulier afin que les coordonnées du point de la poussée de la buse inférieure sur la face inférieure de la chute coincident avec le centre de gravité de cette dernière (ceci pour que la poussée soit bien verticale pour éviter les coincements).

L'évacuation de la chute hors de la zone d'usinage est également beaucoup plus simple et fiable que pour les dispositifs décrits dans l'état de la technique. Comme elle est éjectée ou tombe, tout simplement, soit dans le bac de travail, soit sur ou dans un réceptacle approprié, il n'est pas nécessaire, par exemple, de la remonter à travers le trou évidé, comme décrit dans la demande japonaise publiée sous le No 60-259 323, et de l'éliminer ensuite par un dispositif additionnel, tel que jet de liquide, pinces ou ventouses pour sa préhension et sa translation hors de la zone d'usinage, etc...

La fiabilité peut encore être augmentée car la "chute de la chute" est très facile à détecter et il est donc possible de réaliser des détecteurs très simples qui permettent d'actionner à nouveau l'éjecteur si la chute n'était pas tombée.

Rappelons enfin que certaines formes d'exécution du dispositif selon la présente invention permettent une plus grande souplesse d'application. Il peut être ainsi prévu que l'intensité de la poussée ou de l'impact peut être réglée en fonction de la résistance du pont de matière maintenant la chute, ou que l'application de la poussée peut cesser dès que la chute est éjectée, ou encore que l'intensité et la durée de la poussée sont modulables.

**Revendications**

1. Machine d'électroérosion pour effectuer automatiquement une découpe selon une trajectoire fermée ou dont les extrémités atteignent les bords de la pièce (2) à usiner, ou pour réaliser par enfonçage un évidement traversant la pièce (2) à usiner de part en part, comportant une commande numérique, une tête d'usinage supérieure (5), une tête d'usinage inférieure (6), ainsi qu'un dispositif agencé pour exercer un impact, à un moment prédéterminé de l'usinage, sur une chute (3) encore retenue par un étroit pont de matière (4) de manière à rompre ce dernier, caractérisée par le fait que ce dispositif est un dispositif auxiliaire (21), qu'il est muni d'un percuteur ou d'un repoussoir (22) agencé pour faire tomber ou éjecter cette chute (3) et que la tête d'usinage inférieure (6) est à cote verticale fixe.

2. Machine d'électroérosion selon la revendication 1, caractérisée par le fait que le percuteur ou repoussoir (22) du dispositif auxiliaire (21) est mobile verticalement et que ce dispositif auxiliaire (21) comporte des moyens pour retenir cette pièce (22) en position haute, des moyens pour la libérer cette pièce (22) de façon qu'elle pousse ou percute la chute (3) à expulser et des moyens pour faire réintégrer à cette pièce (22) sa position de repos.

3. Machine d'électroérosion selon l'une des revendications 1 ou 2, caractérisée par un percuteur ou un repoussoir (22) actionné hydrauliquement, pneumatiquement, mécaniquement, électriquement ou magnétiquement.

4. Machine d'électroérosion selon la revendication 1, caractérisée par un dispositif auxiliaire (21) muni d'un organe approprié destiné à cisailler le pont (4).

5. Machine d'électroérosion selon la revendication 1, caractérisée par un dispositif auxiliaire (21) muni d'un organe approprié destiné à exercer sur le pont (4) un couple de torsion-arrachement.

6. Machine d'électroérosion selon la revendication 1, caractérisée par un dispositif auxiliaire (21) muni d'un organe approprié destiné à soumettre le pont (4) à un rayonnement localisé à ce pont (4).

7. Machine d'électroérosion selon la revendication 1, caractérisée par le fait que la tête d'usinage (5) est mobile verticalement et que le dispositif (21) est monté sur cette tête (5).

8. Machine d'électroérosion selon la revendication 7, caractérisée par le fait que le percuteur ou repoussoir (22) du dispositif auxiliaire (21) est mobile verticalement et est actionné par des moyens indépendants de ceux actionnant le mouvement vertical de la tête d'usinage (5).

9. Machine d'électroérosion selon la revendication 8, caractérisée par le fait que le dispositif (21) comporte un système de sécurité réglable en fonction de la distance séparant la chute (3) et l'organe (22) et arrêtant la progression du percuteur ou du repoussoir (22) dès que l'extrémité inférieure de celui-ci atteint une cote verticale déterminée.

10. Machine d'électroérosion selon la revendication 8, caractérisée par le fait que le dispositif (21) comporte un premier système signalant à la commande numérique que la chute (3) a été expulsée et un deuxième système arrêtant la progression du percuteur ou du repoussoir (22) en réponse à ce signal.

11. Machine d'électroérosion selon la revendication 8, caractérisée par un dispositif (21) actionné selon un mouvement vertical à course réglable.

12. Machine d'électroérosion selon la revendication 8, caractérisée par un dispositif (21) actionné selon un mouvement vertical à vitesse réglable.

13. Machine d'électroérosion selon la revendication 8, caractérisée par un dispositif (21) actionné par une force d'intensité réglable.

14. Machine d'électro-érosion selon la revendication 1, caractérisée par le fait qu'elle comporte également un dispositif d'évacuation automatique des chutes (3).

15. Machine d'électro-érosion selon la revendication 1, caractérisée par le fait qu'elle comporte également un réceptacle agencé pour recueillir et évacuer automatiquement les chutes.

16. Machine d'électro-érosion selon la revendication 1, caractérisée par le fait qu'elle est une machine à découper par fil-électrode et qu'elle comporte également un système de coupe et de réenfilage automatique du fil, ainsi qu'une commande numérique agencée pour positionner le dispositif (21) en un point défini dans le plan horizontal par les mêmes coordonnées que celles du trou d'enfilage ménagé dans la pièce.

17. Utilisation d'une machine d'électro-érosion pour découper par filélectrode, comportant une commande numérique, une tête d'usinage supérieure (5), une tête d'usinage inférieure (6) à cote verticale fixe et un dispositif auxiliaire (21) muni d'un percuteur ou d'un repoussoir (22) agencé pour faire tomber ou éjecter, à un moment prédéteminé de l'usinage, une chute (3) encore retenue par un étroit pont de matière (4), caractérisée par les étapes suivantes :

a) arrêt de l'usinage et coupure du fil-électrode,
b) déplacement horizontal de la tête inférieure (6), hors de la zone d'usinage,
c) positionnement du dispositif (21) en un point déterminé en regard de la chute (3) à éjecter,
d) actionnement du dispositif( 21) pour détacher la chute (3) et la faire tomber ou l'éjecter soit dans le bac de travail, soit dans/sur un réceptacle approprié.

18. Utilisation selon la revendication 17, caractérisée par le fait que le pont (4) subsiste sur une partie seulement de la hauteur de la chute (3) à éjecter.

19. Utilisation selon la revendication 17,pour découper une chute dans une pièce dont l'une au moins des faces inférieure et supérieure présente un relief.

20. Utilisation selon la revendication 17, pour découper une chute dans une pièce dont les faces inférieure et supérieure ne sont pas parallèles.

21. Utilisation selon la revendication 17, pour découper une chute dans une pièce dont l'une au moins des faces inférieure et supérieure est oblique.

22. Utilisation selon la revendication 17, caractérisée par le fait qu'on effectue un seul réglage, à savoir le positionnement du dispositif (21) en un point défini par ses coordonnées dans un plan horizontal.

**Claims**

1. Electroerosion machine for automatically executing a cut according to a closed trajectory or whose ends reach the edges of the workpiece (2) to be machined or for completing by sinking a hollowing piercing, from one side to the other in said workpiece (2) to be machined, said machine comprising a numerical control device, an upper machining head (5), an under machining head (6), such as a device designed for exercising an impact, at a predetermined moment of the machining operation, on a clipping (3) retained by a narrow bridge (4) of material in such a way as to rupture said bridge, characterized by the fact that said device is an auxiliary device (21), that it is fitted with a hammer or a percussion piece (22) arranged for dropping or ejecting said clipping (3), and that the under machining head (6) remains at a vertically fixed level.

2. Electroerosion machine according to claim 1, characterized by the fact that the hammer or percussion piece (22) of the auxiliary device (21) is movable vertically and that said auxiliary device (21) comprises means to maintain said element (22) in the high level, means to free said element (22) so that it pushes or strikes the clipping (3) to be expelled and means operable to restore said element (22) to its rest position.

3. Electroerosion machine according to one of the claim 1 or 2, characterized by a hammer or a percussion piece (22) actuated hydraulically, pneumatically, electrically or magnetically.

4. Electroerosion machine according to claim 1, characterized by an auxiliary device (21) fitted with a component adapted for shearing the bridge (4).

5. Electroerosion machine according to claim 1, characterized by an auxiliary device (21) fitted with a component adapted for exerting a torsion-tearing couple on the bridge (4).

6. Electroerosion machine according to claim 1, characterized by an auxiliary device (21) fitted with a component adapted for submitting the bridge (4) to a radiation localized on said bridge (4).

7. Electroerosion machine according to claim 1, characterized by the fact that the machining head (5) is movable vertically and that the device (21) is mounted on said head (5).

8. Electroerosion machine according to claim 7, characterized by the fact that the hammer or percussion piece (22) of the auxiliary device (21) is movable vertically and is actuated by means independent of those which operate the vertical movement of the machining head (5).

9. Electroerosion machine according to claim 8, characterized by the fact that the device (21) is provided with a safety system adjustable with respect to the distance separating the clipping (3) and the element (22) and stopping the progression of the hammer or the percussion piece (22) as soon as the lower end of said element (22) reaches a certain determined vertical height.

10. Electroerosion machine according to claim 8, characterized by a device (21) provided with a first system, signaling to the numerical control device that the clipping (3) has been expelled and a second system stopping the progression of the hammer or percussion piece (22) in response to that signal.

11. Electroerosion machine according to claim 8, characterized by a device (21) being actuated according to a vertical movement with an adjustable travel.

12. Electroerosion machine according to claim 8, characterized by a device (21) being actuated according to a vertical movement at an adjustable speed.

13. Electroerosion machine according to claim 8, characterized by a device (21) being actuated by a force of adjustable intensity.

14. Electroerosion machine according to claim 1, characterized by the fact that it is provided with means for automatic evacuation of said clippings (3).

15. Electroerosion machine according to claim 1, characterized by the fact that it is provided with a receptacle for automatically collecting and evacuating the clippings.

16. Electroerosion machine according to claim 1, characterized by the fact that it is a wire electrode cutting machine and is also provided with an automatic wire cutting and threading device such as a numerical control device designed for setting the device (21) at a point defined in the horizontal plane by the same coodinates as those of the threading hole formed in the workpiece.

17. Use of an electroerosion machine for cutting by means of a wire electrode, said machine comprising a numerical control device, an upper machining head (5), a lower machining head (6), having a fixed vertical position and an auxiliary device (21) provided with a hammer or a percussion piece (22) arranged for dropping or ejecting, at a predetermined moment of the machining operation, a clipping (3) retained by a narrow bridge (4) of material, characterized by the following steps :

a) stopping of machining and cutting of the wire electrode,

b) horizontal displacement of the lower head (6) outside of the machining zone,

c) positioning of said auxiliary device (21) at a determined point, opposite to the clipping (3) to be expelled,

d) actuation of the auxiliary device (21) for separating the clipping (3) and dropping or ejecting it either in the working tank or in/on an appropriate receptacle.

18. Use accorting to claim 17, characterized by the fact that the bridge (4) remains only on a part of the height of the clipping (3) to be expelled.

19. Use according to claim 17, for cutting a clipping in a workpiece having at least one of its lower and upper faces showing a relief.

20. Use according to claim 17, for cutting a clipping in a workpiece having its lower and upper faces not parallel.

21. Use according to claim 17, for cutting a clipping in a workpiece having at least one of its lower an upper faces slanted.

22. Use according to claim 17, characterized by the fact that only one adjustment is made, namely the positioning of the auxiliary device (21) at a point defined by it coordinates in the horizontal plane.

**Patentansprüche**

1. Elektroerosionsmaschine zum automatischen Ausführen eines Schnitts längs einer geschlossenen Bahn oder dessen Enden, die Kanten des zu bearbeitenden Teils (2) erreichen, oder zum Realisieren einer das zu bearbeitende Teil (2) von einer zur anderen Seite durchsetzenden Ausnehmung durch Senken , umfassend eine numerische Steuerung, einen oberen Bearbeitungskopf (5), einen unteren Bearbeitungskopf (6) sowie eine Vorrichtung, ausgebildet zum Ausüben eines Schlags zu einem vorbestimmten Bearbeitungszeitpunkt auf ein Abfallstück (3), das noch durch eine schmale Materialbrücke (4) gehalten wird, derart, daß diese letztere aufgebrochen wird, **dadurch gekennzeichnet,** daß diese Vorrichtung eine Hilfsvorrichtung (21) ist, die mit einem Schlagbolzen oder Treiberstück (22) versehen ist, ausgebildet zum Zufallbringen oder Ausstoßen dieses Abfallstücks (3) und daß der untere Bearbeitungskopf (6) auf einer festliegenden vertikalen Höhe ist.

2. Elektroerosionsmaschine nach Anspruch 1, dadurch gekennzeichnet, daß der Schlagbolzen oder das Treiberstück (22) der Hilfsvorrichtung (21) vertikal beweglich ist und daß diese Hilfsvorrichtung (21) Mittel umfaßt zum Halten dieses Elements (22) In oberer Position, Mittel zum Freigeben dieses Elements (22) derart, daß es das Abfallstück (3) drückt oder stößt und Mittel zum Zurückführen dieses Elements (22) in seine Ruheposition.

3. Elektroerosionsmaschine nach einem der Ansprüche 1 oder 2, gekennzeichnet durch einen hydraulisch, pneumatisch, mechanisch, elektrisch oder magnetisch betätigten Schlagbolzen oder Treiberstück (22).

4. Elektroerosionsmaschine nach Anspruch 1, gekennzeichnet durch eine Hilfseinrichtung (21), versehen mit einem Organ zum Abscheren der Brücke (4).

5. Elektroerosionsmaschine nach Anspruch 1, gekennzeichnet durch eine Hilfsvorrichtung (21), versehen mit einem geeigneten Organ bestimmt zum Ausüben eines Torsionsabreißmoments auf die Brücke (4).

6. Elektroerosionsmaschine nach Anspruch 1, gekennzeichnet durch eine Hilfsvorrichtung (21), versehen mit einem geeigneten Organ bestimmt zum Unterwerfen der Brücke (4) unter eine auf diese Brücke (4) lokalisierten Strahlung.

7. Elektroerosionsmaschine nach Anspruch 1, dadurch gekennzeichnet, daß der Bearbeitungskopf (5) vertikal beweglich ist und daß die Vorrichtung (21) an diesem Kopf montiert ist.

8. Elektroerosionsmaschine nach Anspruch 7, dadurch gekennzeichnet, daß der Schlagbolzen oder das Treiberstück der Hilfsvorrichtung (21) vertikal beweglich ist und betätigt wird durch Mittel, die unabhängig sind von jenen, welche die Vertikalbewegung des Bearbeitungskopfes (5) bewirken.

9. Elektroerosionsmaschine nach Anspruch 8, dadurch gekennzeichnet, daß die Vorrichtung (21) ein Sicherheitssystem umfaßt, das einstellbar ist in Funktion des Abstandes, der das Abfallstück (3) und das Organ (22) trennt und die Verlagerung des Schlagbolzens bzw. Treiberstücks (22) beendet, wenn das untere Ende desselben eine vorbestimmte Vertikalposition erreicht.

10. Elektroerosionsmaschine nach Anspruch 8, dadurch gekennzeichnet, daß die Vorrichtung (21) ein erstes System umfaßt, das der numerischen Steuerung signalisiert, daß das Abfallstück (3) ausgestoßen worden ist und ein zweites System, das den Vorschub des Schlagbolzens oder Treiberstücks (22) in Abhängigkeit von diesem Signal beendet.

11. Elektroerosionsmaschine nach Anspruch 8, gekennzeichnet durch eine Vorrichtung (21), die gemäß einer Vertikalbewegung mit einstellbarem Weg betätigbar ist.

12. Elektroerosionsmaschine nach Anspruch 8, gekennzeichnet durch eine Vorrichtung (21), die gemäß einer Vertikalbewegung mit einstellbarer Geschwindigkeit betätigbar ist.

13. Elektroerosionsmaschine nach Anspruch 8, gekennzeichnet durch eine Vorrichtung (21), die von einer Kraft mit einstellbarer Intensität betätigbar ist.

14. Elektroerosionsmaschine nach Anspruch 1, dadurch gekennzeichnet, daß sie ferner eine automatische Abfallstück-(3)-Austragvorrichtung umfaßt.

15. Elektroerosionsmaschine nach Anspruch 1, dadurch gekennzeichnet, daß sie ferner einen Behälter umfaßt, ausgebildet zum Sammeln und automatischen Austragen der Abfallstücke.

16. Elektroerosionsmaschine nach Anspruch 1, dadurch gekennzeichnet, daß sie eine Maschine zum Schneiden mit einer Drahtelektrode ist und daß sie ferner ein Schneidesystem und automatisches Wiedereinfädelungssystem des Drahtes umfaßt sowie eine numerische Steuerung, ausgebildet zum Positionieren der Vorrichtung (21) an einem Punkt, der in der Horizontalebene durch dieselben Koordinaten definiert ist wie jene des Einfädelungsloches, das in das Teil eingebracht ist.

17. Verwendung einer Elektroerosionsmaschine zum Ausschneiden mittels Drahtelektrode, umfassend eine numerische Steuerung, einen oberen Bearbeitungskopf (5), einen unteren Bearbeitungskopf (6) mit vertikal festliegender Höhe und einer Hilfsvorrichtung (21), versehen mit einem Schlagbolzen oder Treiberstück (22), ausgebildet zum Zufallbringen oder Ausstoßen, an einem vorbestimmten Bearbeitungszeitpunkt, eines Abfallstücks (3), das noch von einer schmalen Materialbrücke (4) gehalten wird, gekennzeichnet durch die folgenden Schritte:
   (a) Beenden der Bearbeitung und des Schneidens der Drahtelektrode,
   (b) Horizontalverlagerung des unteren Kopfes (6) aus der Bearbeitungszone heraus,
   (c) Positionieren der Vorrichtung (21) an einem bestimmten Punkt gegenüber dem auszustoßenden Abfallstück (3),
   (d) Betätigen der Vorrichtung (21) zum Lösen des Abfallstücks (3) und Zufallbringen desselben oder Ausstoßen entweder in die Arbeitswanne oder in oder auf einen geeigneten Aufnehmer.

18. Verwendung nach Anspruch 17, dadurch gekennzeichnet, daß die Brücke (4) nur auf einem Teil der Höhe des auszustoßenden Abfallstücks (3) bleibt.

19. Verwendung nach Anspruch 17 zum Ausschneiden eines Abfallstücks in einem Teil, von dem mindestens eine der oberen oder unteren Seiten ein Relief aufweist.

20. Verwendung nach Anspruch 17 zum Ausschneiden eines Abfallstücks in einem Stück, dessen obere und untere Seiten nicht parallel sind.

21. Verwendung nach Anspruch 17 zum Ausschneiden eines Abfallstücks in einem Teil, von dem mindestens eine der oberen und unteren Seite schräg ist.

22. Verwendung nach Anspruch 17, dadurch gekennzeichnet, daß man eine einzige Einstellung vornimmt, nämlich die Positionierung der Vorrichtung (21) an einem Punkt, der durch seine Koordinaten in einer Horizontalebene definiert ist.

FIG. 1

FIG. 2a

FIG. 2b

FIG. 2c

FIG. 2d

14

FIG. 3a

FIG. 3b

FIG. 3c

FIG. 3d

EP 0 267 151 B1

FIG. 4

FIG. 5a

FIG. 5b

16

FIG. 6a

FIG. 6b

FIG. 7a

FIG. 7b

FIG. 8a

FIG. 8b